# FASCICULE DE BREVET EUROPEEN

(11) **EP 0 542 616 B1**
(45) Date de publication et mention de la délivrance du brevet: **18.09.1996**
(21) Numéro de dépôt: 92403033.1
(22) Date de dépôt: 10.11.1992
(51) Int. Cl.: C10L 5/40

(54) **Combustible destiné a la lutte contre les gelées ou les brouillards**
Brennstoff zur Bekämpfung von Frost und Nebel
Fuel for controlling frost and fog

(30) Priorité: 12.11.1991 FR 9113861
(43) Date de publication de la demande: 19.05.1993
(73) Titulaire: ELF ANTAR FRANCE, F-92400 Courbevoie (FR); INSTITUT FRANCAIS DU PETROLE, F-92500 Rueil Malmaison (FR)
(72) Inventeur: Bossand, Bernard, F-69360 Communay (FR); Casanova, Paul, F-20133 Ucciani (FR); Navarra, François-Pierre, F-69260 Charbonniere Les Bains (FR)
(74) Mandataire: Boillot, Marc

(56) Documents cités:
- EP-A- 0 283 381
- GB-A- 1 585 684
- US-A- 4 357 145

## Description

La présente invention est relative à un produit combustible solide pour la lutte contre les brouillards et les gelées.

Quelle que soit la période de l'année, on sait qu'il peut se produire, localement ou non, des brouillards pouvant perturber l'utilisation de sites tels que aéroports, péages d'autoroutes, etc...

De même, durant la saison froide, il peut être souhaitable de préserver du gel des zones limitées sur lesquelles se trouvent des produits sensibles au froid, des cultures par exemple.

Une solution consiste à réchauffer l'air dans la zone à protéger. L'utilisation de sources d'énergie classiques telles que l'électricité, le fuel ou le gaz est possible mais le prix de revient est élevé et cette solution est inapplicable économiquement.

On peut utiliser des déchets combustibles à l'état brut, mais ceux-ci ne remplissent généralement pas les conditions nécessaires à ce genre d'utilisation en particulier une grande durée de combustion sans risque d'extinction.

Il faut donc mettre au point des produits combustibles utilisant le plus possible des résidus à faible prix de revient associés à d'autres éléments permettant à l'ensemble de satisfaire aux conditions de stabilité et de vitesse de combustion.

Il est connu d'utiliser pour ce faire un mélange entre un produit d'origine organique dont le pouvoir calorifique est faible ou moyen et un produit à haut contenu énergétique généralement d'origine pétrolière destiné à relever le pouvoir calorifique du mélange.

Le brevet GB 1.585.684 décrit une bûche combustible obtenue par extrusion d'un mélange d'un support solide de combustion et d'un produit liant incorporant de la poix de tall-oil.

Le support solide de combustion est constitué par des fibres cellulosiques et le liant par au moins un combustible liquide. Ce type de bûche combustible est bien adapté pour brûler dans les cheminées domestiques.

Le brevet français n° 87.03372 décrit un procédé de traitement de suspension d'hydrocarbures à partir de poudre de bois qui conduit à un combustible saturé d'eau et d'hydrocarbures dont les propriétés se rapprochent de celles recherchées pour la protection contre les brouillards et le gel.

Les produits généralement utilisés comme élément à haut pouvoir calorifique du mélange proviennent directement ou indirectement de la distillation du pétrole et présentent un certain nombre d'inconvénients :
- la vitesse de combustion est trop rapide,
- le stockage du produit est limité car les matières organiques qu'ils contiennent sont sensibles aux germes microbiens et aux champignons.
- la combustion dégage des fumées gênantes pour l'environnement,
- le produit peut présenter une odeur désagréable due à la matière organique qu'il contient,

La présente invention a pour but de pallier aux inconvénients ci-dessus en obtenant un combustible qui présente les qualités suivantes :
- un Pouvoir Calorifique Inférieur (PCI) élevé compris entre 32000 et 34000 kilojoules/kg,
- une durée de combustion qui, pour une présentation de cinq kilogrammes de produit sous forme d'un cylindre de diamètre égal à sa hauteur est supérieure à cinq heures, chacun des combustibles pouvant être relié par fil, ce qui permet de prolonger la durée de combustion,
- l'absence de fumées et d'odeurs désagréables,
- une poursuite de combustion en cas de disparition de la flamme,
- une mise à feu simple, fiable et automatisable,
- une tenue au stockage au moins égale à deux ans.

L'invention objet du brevet consiste en un combustible solide comprenant un mélange fait (i) d'un support de combustion consistant en matières organiques et (ii) d'un produit à haut pouvoir calorifique consistant en de la poix de tall-oil, le rapport pondéral de la poix de tall-oil au support de combustion étant choisi entre 0,5 et 2 de telle sorte que le combustible solide présente un PCI au moins égal à 32 000 kJ/kg, caractérisé en ce que le support de combustion se compose de poudre de bois ayant servi à purifier des suspensions d'hydrocarbures.

La poix de tall-oil, fond de la colonne de distillation sous vide du tall-oil brut, lui même extrait de la résine de pin ou d'arbres d'espèces diverses dont l'épicéa se présente sous la forme d'une pâte brute dont le PCI est compris entre 36000 et 38000 kilojoules/kg.

Elle présente des qualités bactéricides comme en présentent les résines d'origine arboricole et les produits qui en sont issus. Du fait de ses qualités de viscoélasticité, elle facilite l'agglomération des matieres organiques solides et permet de présenter le combustible objet de l'invention sous forme de volumes solides à la température ambiante, avec inclusion dans la masse d'un dispositif tel qu'une mèche pour permettre un allumage manuel ou automatique aisé par fil ou sans fil.

Afin d'avoir une combustion régulière, le support de combustion comporte, comme indiqué ci-dessus, de la poudre de bois ayant servi à purifier des suspensions organiques en quantité sufisante pour assurer au combustible un PCI d'au moins 32000 kilojoules/kg.

Le support de combustion précité peut encore renfermer des matières organiques complémentaires provenant de déchets, de cultures énergétiques ou de gisements naturels. Elles se présentent sous forme de poudre oléophilisée et hydrophilisée.

Afin d'encore améliorer le produit il est possible d'ajouter des additifs accroissant les qualités du combustible.

Les caractéristiques et avantages de l'invention apparaîtront mieux après la description qui suit, donnée à titre explicatif et nullement limitatif.

La matière organique du support de combustion est à base de matériaux dont la molécule renferme du carbone, de l'hydrogène et au moins un hétéro-atome (oxygène et/ou azote) dont l'origine est principalement végétale ou animale.

Dans tous les cas, et afin d'assurer un pouvoir calorifique d'au moins 32000 kilojoules/kg, la matière organique se composera, au moins en partie, de poudre de bois ayant servi à purifier des suspensions contenant des hydrocarbures ou des graisses. Ces lits de filtration, contenant des hydrocarbures, sont décrits dans le brevet français 87.03372. En plus de leurs pouvoirs calorifiques, ces poudres de bois présentent l'avantage de faciliter grandement le mélange avec la poix de tall-oil.

Les déchets complémentaires peuvent être d'origine humaine ou animale, par exemple, boues urbaines, lisiers, fumiers, fraction des ordures ménagères, papiers et cartons. Ils comprennent aussi des résidus combustibles de l'industrie agro-alimentaire, par exemple drêches, rafles de maïs, paille de céréales, tiges de topinambour, lie de vin, pulpes, ou des résidus produits par la mise en oeuvre du bois, par exemple, écorces, sciures, liqueurs noires, aiguilles de pin.

Les cultures énergétiques comprennent, par exemple, les plantes aquatiques que l'on rencontre dans les eaux douces et les eaux issues de lagunes, les eaux saumâtres et les océans, ainsi que les plantes terrestres que l'on cultive pour produire de l'énergie, par exemple, les cannes de bambous.

La matière organique complémentaire peut être également une farine de bois, fabriquée à partir de bois défibré ou de sciures séchées, broyées et tamisées. Elle peut encore provenir de bois défibré, de papier de récupération dilacéré et de feuilles de papier à résistance humide ayant servi d'agent de filtration pour des liquides chargés.

Les gisements naturels comprennent les tourbes ou sédiments riches en matières lignocellulosiques.

On mélange ladite poudre de bois à de la poix de tall-oil, produit provenant du fond de la colonne de distillation sous vide du tall-oil brut qui est un extrait de résine de pin ou d'arbres d'espèces diverses dont l'Epicéa.

Pour une part, en poids, de ladite poudre de bois on ajoute de 0,5 à 2 parts de poix de tall-oil, et de préférence de 0,8 à 1,4 parts.

### CARACTERISTIQUES DE LA POIX DE TALL-OIL

36000 < PCI < 38000 kilojoules/kg
Etat physique: pâte brune
1,05 < d < 1,1
Point de fusion: 40 à 55°C
Point Eclair: > 250°C
Cendres: 0,30 à 0,60 %
Pour un Indice d'Acide de l'ordre de 50, la composition de la poix de tall-oil s'établie comme suit:
. 20% d'acides résiniques libres (abiétique, déhydroabiétique etc...
   (acides résiniques oxydés : oxydéhydroabiétique).
. 5% d'acides gras estérifiés (oléique, linoléique, etc...)
. 50% d'insaponifiables:
   - stérols : (campestérol - silostérol - sitostanol)
   - alcools : (cycloarténol)
   - alcools résiniques (isopimarol - déhydroabitol, etc...)
   - alcools linéaires cireux en C₂₂, C₂₄, C₂₆
   - hydrocarbures diterpéniques (primaradiène)

La poix de tall-oil, améliorée ou pas brûle bien avec une flamme claire, sans fumée et son effet retardateur inattendu sur la combustion de la poudre de bois selon l'invention a été mis en évidence sur tous les types de matières organiques cités ci-dessus. En outre, elle dégage une odeur agréable. Elle présente une grande aptitude au moulage et une remarquable tenue au froid.

A cette poix, il sera possible d'ajouter des additifs.

Ils ont pour effet d'améliorer la viscoélasticité de la poix de tall-oil et donc la tenue du combustible selon l'invention.

Ils ont en outre un effet retardateur sur la combustion et ils améliorent la viscoélasticité exigée par le stockage à température élevée, jusqu'à 40 à 50°C ainsi que le stockage à basse température, jusqu'à -20 à -30°C. Nous avons observé que grâce à ces additifs le "breaking point", c'est à dire la température de fissurage, était amélioré si bien que le produit à -30°C ne présente pas de trace de fissure et qu'ainsi son transport est grandement amélioré.

On pourra utiliser des résines ajoutées dans une proportion de 5 à 10% en masse à la poix de tall-oil. Ces résines seront des colophanes, des résines abiétoformophénoliques et des résines terpènes-phénoliques. Elles sont toutes issues de la poix de tall-oil et donc parfaitement compatibles avec celle-ci.

On pourra utiliser dans des proportions comprises entre 5 et 10%, des lignosulfonates ou lignosulfites, en poudre ou en solution concentrée. Ces produits dérivés de la fabrication de la pâte à papier de couleur jaune brun ont en outre une odeur agréable et permettent de se passer de l'addition d'essences terpéniques si l'on veut donner une odeur au combustible. On utilisera de préférence de solutions concentrées dans de l'eau ou de l'eau mélangée à de l'alcool. Dans ces conditions, le mouillage de la matière organique se fait bien et la compatibilité avec la poix de tall-oil est remarquable. La teneur en cendres est élevée : 10% dont 4% sont du calcium. Ce produit disponible en grande quantité à un PCI élevé à cause de sa teneur en lignine (de 80 à 90%).

On pourra utiliser dans des proportions comprises entre 5 et 10% des sous-produits de la fabrication de sucre telle que la mélasse. Celle-ci qui présente l'inconvénient de ne pas être stable lorsque elle est seule se trouve stabilisée en présence de tall-oil.

On pourra utiliser également sous forme de poudre, granulés, rubans ou en écailles les gommes ou leurs déchets de fabrication utilisables seuls ou en milieu aqueux :
- gomme arabique (criblée, nettoyée, en poudre),
- gomme karaya (en granulés, en poudre et en grabeaux),
- gomme adragante (en rubans, en écailles, ou en poudre).
et les gommes ou leur déchets utilisables seuls ou associés à un solvant :
- Copal du Zaïre,
- Gomme d'Amar de classement,
- Gomme d'Amar fossile,
- Gomme Manille tendre d'Indonésie,
- Gomme Accroide route d'Australie,
- Gomme Elemi,
- Mastic en larmes,
- Mastic de Terpène,
- Gomme Sandaraque en larmes,
- Gomme Benjoin de Sumatra,
- Gomme Laque en feuilles et en grains de l'Union Indienne et de Thaïlande,
- Gomme laque blanchie,
- Gomme laque décirée,
- Gomme Copal Manille 100% soluble de Philippines : Alphacopal.

On pourra utiliser également :
Les cires animales :
- blanc de baleine (Palmitate de Cétyle)
- cire d'abeille
- cire de gomme laque.
Les cires végétales :
- cire de Carnauba
- cire de Candelilla,
et les cires issues des hydrocarbures décrits plus loin.
Les colloïdes et dérivés, amylacés, sous forme de produit pur ou les déchets de leur fabrication :
- Farine de Caroube,
- Farine de Guar,
- Cargao (pulpe de caroube torréfiée et pulvérisée),
- Tapioca de Madagascar (en flocons, en granulés, en semouline),
- Fécule de manioc malgache,
- Fécule d'Arrow Root de Saint Vincent. Les extraits:
- Extrait de Cassel en grains,
- Extrait d'Acajou en flocons,
- Extrait de chêne en flocons.
Les asphaltes durs naturels,
- la gilsonite
- les asphaltes durs extraits des hydrocarbures,
- les résines naturelles, par exemple celles obtenues par lixiviation d'asphaltes
- les résines synthétiques sous forme de polymères de type polypropylène ou polyéthylène ou de déchets de fabrication de polymères ou de déchets de produits finis fabriqués à partir de polymères types bouteilles ou film protecteur de culture.

Nous donnons ci-dessous un exemple de fabrication de combustible selon l'invention à partir de poix de tall-oil. La poix de tall-oil se présente sous la forme d'une pâte brune légèrement odorante. Elle doit être chauffée autour de 100°C pour être pompable et transportable sous forme liquide. Sa teneur en eau est faible (de l'ordre de 0,1%), son point de fusion est compris entre 40 et 55°C, sa teneur en soufre est comprise entre 0,2 à 0,3% poids. Le point éclair est supérieur à 250°C. La teneur en matière minérale est comprise entre 0,3 à 0,6% poids. La densité est comprise entre 1,05 et 1,1. Son pouvoir calorifique est compris entre 36000 et 38000 kilojoules/kg.

La matière organique est une poudre de résineux issue du traitement d'eaux huileuses provenant de stations-service. Elle est séchée à 80°C. Sa composition est la suivante :

| | % en poids | PCI (kJ/kg) |
|---|---|---|
| Poudre de résineux | 35 | 17500 |
| Hydrocarbures (C₅ à C₄₀) | 50 | 39700 |
| Matières minérales | 10 | - |
| Eau | 5 | - |

A 40 parties de cette biomasse on ajoute 50 parties en poids de poix de tall-oil plus cinq parties de résines collophanes, 0,5 partie d'huiles terpéniques et 4,5 parties de lignosulfonate.

Chacun de ces éléments est introduit à froid dans un mélangeur à vis, la poix de tall-oil y étant introduite à 100°C. Le mélange, parfaitement homogénéisé, sort de la machine à 60°C sous forme d'une pâte dure. Il traverse un tunnel de refroidissement ou un arrosage d'eau froide. Après ce refroidissement le produit est solide. Il peut être percé de conduits nécessaires à l'air de la combustion. Au produit hydrophobe et en forme, est ajouté le système d'allumage.

Le combustible peut être revêtu d'une enveloppe ou d'un film protecteur grâce, par exemple, à une trempe dans un bain de paraffine liquide à 80°C ou bien une trempe dans un bain d'émulsions de paraffine dans l'eau ou d'émulsions d'hydrocarbures ou dans un polymère rendu liquide par la température.

Le combustible a une teneur en eau de 4,5%. Ses caractéristiques exprimées par rapport à la matière sèche sont les suivantes : PCI = 33600 kilojoules/kg. Cinq kilogrammes de combustible selon l'exemple sous la forme d'un cylindre de 10cm de diamètre met 5 heures à brûler avec un très léger dégagement de fumée et une odeur faible de résine de pin. La teneur en cendres résiduelles est de 1%. Si la flamme s'arrête, la combustion se prolonge.

La même composition utilisant la même poudre de bois vierge de tout hydrocarbure aurait conduit à un PCI de 27000 kJ/kg, ce qui aurait été insuffisant.

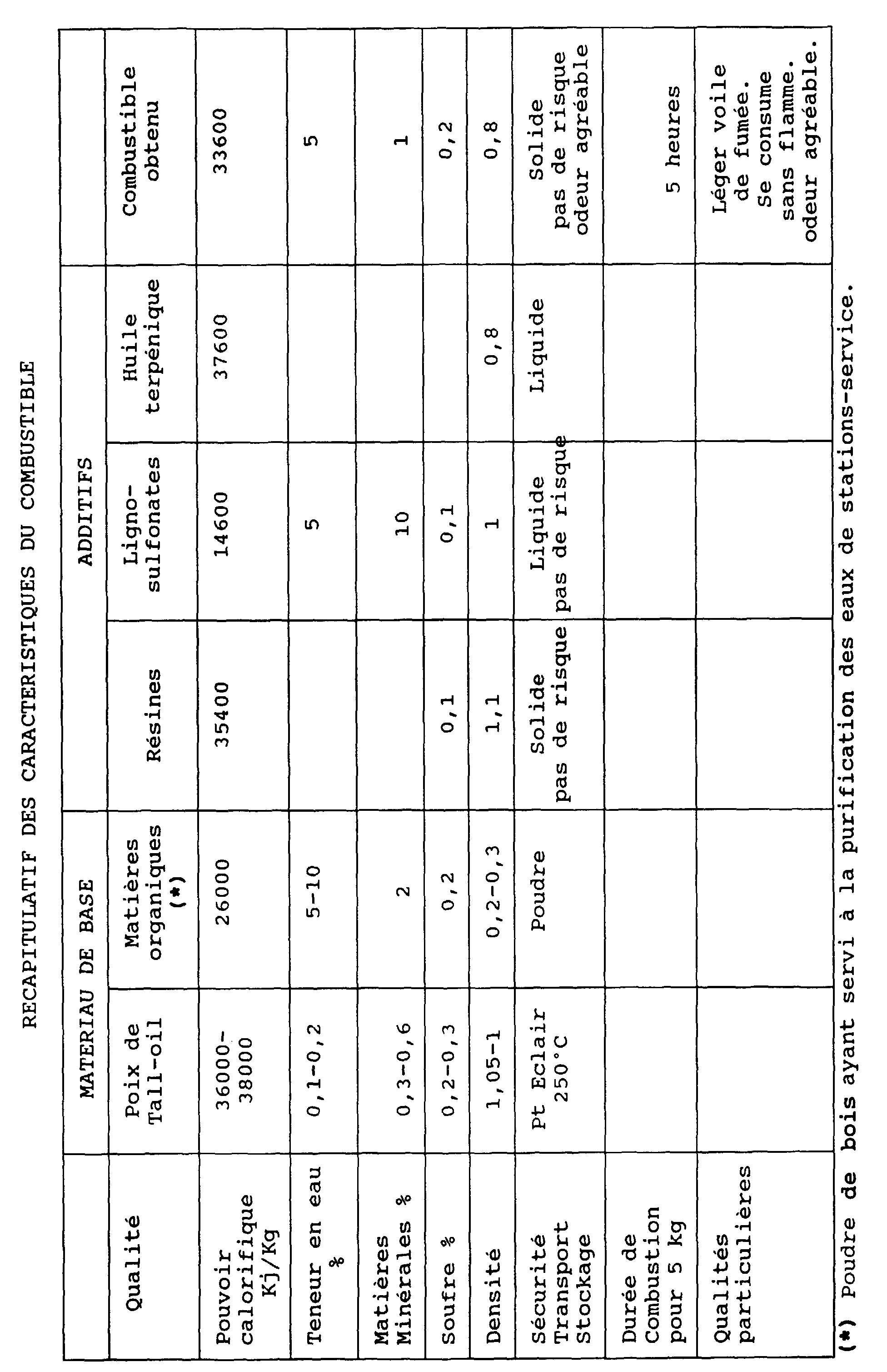

## Revendications

1. Combustible solide pour la lutte contre les gelées et les brouillards comprenant un mélange fait, (i) d'un support de combustion consistant en matières organiques et (ii) d'un produit à haut pouvoir calorifique consistant en de la poix de tall-oil, le rapport pondéral de la poix de tall-oil au support de combustion étant choisi entre 0,5 et 2 de telle sorte que le combustible solide présente un PCI (pouvoir calorifique inférieur) au moins égal à 32 000 kJ/kg, caractérisé en ce que le support de combustion se compose de poudre de bois ayant servi à purifier des suspensions d'hydrocarbures.

2. Combustible solide selon la revendication 1 caractérisé en ce que l'on ajoute à la poix de tall-oil des gommes, des résines naturelles ou artificielles ou le déchet de leur fabrication.

3. Combustible solide selon la revendication 1 caractérisé en ce que l'on ajoute à la poix de tall-oil des lignosulfonates ou des lignosulfites.

4. Combustible solide selon la revendication 1 caractérisé en ce que l'on ajoute à la poix de tall-oil des sous-produits de la fabrication du sucre ou de l'industrie de la confiserie.

## Patentansprüche

1. Fester Brennstoff für die Frost- und Nebelbekämpfung, der ein fertiges Gemisch aus (i) einem aus organischen Stoffen bestehenden Verbrennungsträger und (ii) einem aus Tallölpech bestehenden Produkt von hohem Heizwert umfaßt, wobei das Gewichtverhältnis zwischen Tallölpech und Verbrennungsträger zwischen 0,5 und 2,0 so ausgewählt wird, daß der brennbare Feststoff einen spezifischen Heizwert von wenigstens 32.000 kJ/kg aufweist, dadurch gekennzeichnet, daß der Verbrennungsträger aus Holzmehl zusammengesetzt ist, das der Reinigung von Kohlenwasserstoffsuspensionen dient.

2. Brennbarer Feststoff nach Anspruch 1, dadurch gekennzeichnet, daß man dem Tallölpech Gummis, natürliche oder künstliche Harze oder bei ihrer Herstellung anfallende Abfallprodukte zusetzt.

3. Brennbarer Feststoff nach Anspruch 1, dadurch gekennzeichnet, daß man dem Tallölpech Ligninsulfonate oder Ligninsulfite zusetzt.

4. Brennbarer Feststoff nach Anspruch 1, dadurch gekennzeichnet, daß man dem Tallölpech Nebenprodukte der Zuckerherstellung oder der Konditoreiwarenindustrie zusetzt.

## Claims

1. Solid fuel for combatting ice and fog, comprising a mixture made of (i) a fuel support consisting of organic materials and (ii) a product of high calorific value consisting of tall oil pitch, the weight ratio of the tall oil pitch to the fuel support being selected so as to be between 0.5 and 2, such that this solid fuel has a PCI (lower calorific value) of at least 32 000 kJ/kg, characterised in that the fuel support is formed of a wood powder which has been used as a purifier for hydrocarbon suspensions.

2. Solid fuel according to Claim 1,
characterised in that gums, natural or artificial resins or the waste from the production thereof are added to the tall oil pitch.

3. Solid fuel according to Claim 1,
characterised in that lignosulphonates or lignosulphites are added to the tall oil pitch.

4. Solid fuel according to Claim 1,
characterised in that by-products of sugar manufacture or of the confectionary industry are added to the tall oil pitch.
